# EUROPEAN PATENT APPLICATION

(11) **EP 4 573 979 A1**
(43) Date of publication of application: **25.06.2025**
(21) Application number: 23854186.6
(22) Date of filing: 21.07.2023
(51) Int. Cl.: A47J 31/00, A47J 31/44

(54) **SPARKLING WATER MACHINE CAPABLE OF AUTOMATICALLY RESETTING FROM GAS INFLOW**

(30) Priority: 16.08.2022 CN 202222161015 U
(71) Applicant: JIANGMEN YIKEMAITE ELECTRONIC TECHNOLOGY CO., LTD, Kaiping, Jiangmen, Guangdong 529300 (CN)
(72) Inventor: SONG, Tony, Jiangmen, Guangdong 529300 (CN)
(74) Representative: Longoni, Alessandra
(86) International application number: PCT/CN2023/108661
(87) International publication number: WO 2024/037281

(57) **Abstract**

The present utility model discloses a sparkling water machine capable of achieving automatic resetting from gas inflow, comprising a main machine, a sub-machine, a gas inflow main body, a gas path main body, a button, a gas inflow pressure rod, a gas pressure chamber, a gas pressure valve body, a gas pressure valve rod, a first resetting device, a second resetting device and a gas inflow connecting rod hook, and the gas inflow pressure rod is provided with a through hole. When in use, the gas inflow pressure rod is pressed through the button, such that a carbon dioxide gas cylinder supplies gas. The through hole and the gas inflow connecting rod hook move relative to each other. An upper end of the gas inflow connecting rod hook is inserted into the through hole and located above the through hole, and a hook body provided on the gas inflow connecting rod hook hooks an upper edge of the through hole under the action of the second resetting device, such that the gas inflow pressure rod is fixed. When a gas pressure in a sparkling water bottle reaches a specified value, the gas pressure is fed back to the gas pressure valve body to press a driving end of the gas inflow connecting rod hook, such that the hook body swings to be detached from the edge of the through hole, thereby achieving automatic resetting and stopping gas inflow. A whole gas inflow and resetting process is controlled by a mechanical structure, and higher stability is achieved.

## Description

### Technical Field

The present utility model relates to the field of sparkling water machines, in particular to a sparkling water machine capable of achieving automatic resetting from gas inflow.

### Background

According to current sparkling water machines, in order to stop continuous filling of a carbon dioxide gas into a sparkling water bottle after a gas pressure in the sparkling water bottle reaches a specified value, a detection device for detecting the gas pressure in the sparkling water bottle is usually provided on a main machine, and then a signal is fed back to a driving portion through the detection device, such that the driving portion stops addition of the gas. However, the method has the problems that due to the existence of an electric control portion, the stability is relatively poor, and the phenomenon of false detection easily occurs.

### Summary of the Utility Model

In order to solve the above problems, a purpose of the present utility model is to provide a sparkling water machine that relies solely on a structure to limit gas inflow of carbon dioxide and stop continuous filling of carbon dioxide into a sparkling water bottle.

A technical solution adopted in the present utility model to solve the problems is: a sparkling water machine capable of achieving automatic resetting from gas inflow, comprising:
a main machine, wherein one side of the main machine is provided with a sub-machine, the main machine is provided with a gas inflow main body, the gas inflow main body is provided with a gas cylinder connecting port, and the gas inflow main body is provided with a gas inflow channel that extends to the gas cylinder connecting port and a gas inflow rod that is used for pressing a carbon dioxide gas cylinder;
a gas inflow pressure rod, wherein the gas inflow pressure rod is provided on the main machine, the gas inflow pressure rod is located on a surface of the gas inflow rod and used for driving the gas inflow rod to press down, the gas inflow pressure rod is provided with a through hole penetrating up and down, and a surface of the main machine is provided with a button that drives the gas inflow pressure rod to move;
a gas path main body, wherein the gas path main body is provided on the sub-machine, a bottom of the gas path main body is provided with a water bottle connector, the gas path main body is provided with a main gas path channel that is in communication to the water bottle connector and the gas inflow channel, the gas path main body is provided with a gas pressure chamber, a front end of the gas pressure chamber is provided with a gas pressure channel that is in communication to the water bottle connector, and a rear end of the gas pressure chamber is provided with a gas pressure hole;
a gas pressure valve body, wherein the gas pressure valve body is provided in the gas pressure chamber, the gas pressure valve body is provided with a first resetting device that drives the gas pressure valve body to seal the gas pressure channel, and a rear end of the gas pressure valve body is provided with a gas pressure valve rod used for extending out along the gas pressure hole to an outer side of the gas path main body; and
a gas inflow connecting rod hook, wherein the gas inflow connecting rod hook is pivotally connected in the main machine, an upper end of the gas inflow connecting rod hook is provided with a hook body towards the through hole, a surface of the hook body and/or a lower end of the through hole is provided with a guide slope, a lower end of the gas inflow connecting rod hook is a driving end directly facing the gas pressure valve rod, the gas inflow connecting rod hook is provided with a second resetting device, and when the gas inflow pressure rod is pressed down, the upper end of the gas inflow connecting rod hook penetrates through the through hole to move to an upper end of the through hole and the hook body hooks an upper edge of the through hole.

As a further improvement of the above technical solution, a rear end of the gas inflow pressure rod is pivotally connected in the main machine, a middle portion of the gas inflow pressure rod is located above the gas inflow rod, and the through hole is provided at a front end of the gas inflow pressure rod.

As a further improvement of the above technical solution, an end cover is in threaded connection to the rear end of the gas pressure chamber, the gas pressure hole is provided on the end cover, a rear end of the first resetting device abuts against an inner surface of the end cover, an outer periphery of the end cover is provided with a first driven gear, a surface of the sub-machine or the main machine is provided with a gear knob, and the gear knob comprises a first driving gear that is engaged with the first driven gear.

As a further improvement of the above technical solution, a clutch gear set is provided between the first driven gear and the first driving gear, the clutch gear set comprises a first clutch gear and a second clutch gear, the first clutch gear is provided with a second driven gear that is always engaged with the first driven gear, the second clutch gear is provided with a third driven gear that is engaged with the first driving gear, the first clutch gear is provided with first clutch teeth, the second clutch gear is provided with second clutch teeth that are engaged with the first clutch teeth, the first clutch gear or the second clutch gear is provided with an elastic pressing member such that the first clutch gear and the second clutch gear are engaged with each other, the gear knob is provided with a first limiting end that limits a rotation amplitude of the gear knob, and the first driven gear is provided with a second limiting end that limits a rotation amplitude of the first driven gear.

As a further improvement of the above technical solution, the first clutch teeth are provided on an upper end surface of the first clutch gear, the second clutch teeth are provided on a lower end surface of the second clutch gear, and the elastic pressing member is provided on an upper end surface of the second clutch gear and presses the second clutch gear downward on the upper end surface of the first clutch gear.

As a further improvement of the above technical solution, several Hall sensors are provided on a peripheral side of the gear knob, the gear knob is provided with magnets that cooperate with the Hall sensors, and the surface of the sub-machine or the main machine is provided with gear display screens that are electrically connected to the Hall sensors.

As a further improvement of the above technical solution, the main machine is internally provided with a damping gear, and the gas inflow pressure rod is provided with a damping rack that is engaged with the damping gear.

As a further improvement of the above technical solution, the gas path main body is pivotally connected to the sub-machine such that the gas path main body can swing outward relative to the sub-machine.

As a further improvement of the above technical solution, the gas path main body is provided with an exhaust chamber, a front end of the exhaust chamber is provided with an exhaust channel that is in communication to the water bottle connector and an exhaust hole that is provided at a rear end of the exhaust chamber, the exhaust chamber is internally provided with an exhaust valve, a rear end of the exhaust valve is provided with an exhaust rod that extends along the exhaust hole to an outer side of the gas path main body, the main machine is internally provided with an exhaust push rod support member that is located at a rear end of the exhaust rod, a surface of the exhaust push rod support member is provided with a front pressure surface and an inclined guide surface that is located at a lower end of the front pressure surface, and the exhaust rod abuts against the front pressure surface and enables the exhaust valve to seal the exhaust channel in a normal state.

As a further improvement of the above technical solution, a weight sensor is provided below the gas inflow main body, a gas inflow main body support member is pivotally connected in the main machine, a rear end of the gas inflow main body support member is provided with a support portion that is located below the gas inflow main body and used for supporting the gas inflow main body up and down from the weight sensor, a front end of the gas inflow main body support member is a driving handle, and the driving handle is movably connected with the gas path main body such that the gas path main body drives the driving handle to swing when swinging.

Beneficial effects of the present utility model are as follows. When in use, the gas inflow pressure rod is pressed through the button, such that the carbon dioxide gas cylinder can be pressed by the gas inflow rod to supply a gas, and a carbon dioxide gas enters the sparkling water bottle mounted on the gas cylinder connecting port through the gas inflow channel and the main gas path channel. Meanwhile, because the gas inflow pressure rod is driven, the through hole and the gas inflow connecting rod hook move relative to each other. The upper end of the gas inflow connecting rod hook is inserted into the through hole and located above the through hole, and the hook body hooks the upper edge of the through hole under the action of the second resetting device, such that the gas inflow pressure rod is fixed and stays in a state of driving the gas inflow rod for a long time. When a gas pressure in the sparkling water bottle reaches a specified value, the gas pressure is fed back to the gas pressure valve body through the gas pressure channel, such that the gas pressure valve body is pushed to overcome a force of the first resetting device to move outward and then press the driving end of the gas inflow connecting rod hook, and the gas inflow connecting rod hook swings to enable the hook body to swing so as to be detached from the edge of the through hole. At this time, the gas inflow pressure rod is not limited so as to be automatically reset and to stop gas inflow. A whole gas inflow and resetting process is controlled by a mechanical structure, and higher stability is achieved.

### Brief Description of the Drawings

The present utility model will be further explained below in conjunction with the description of the accompanying drawings and specific embodiments.
FIG. 1 is a structural schematic diagram of a preferred embodiment of the present utility model;
FIG. 2 is a first cross-sectional structural schematic diagram in an A-A direction in FIG. 1;
FIG. 3 is a partially enlarged structural schematic diagram at Part B in FIG. 2;
FIG. 4 is a second cross-sectional structural schematic diagram in the A-A direction in FIG. 1;
FIG. 5 is a third cross-sectional structural schematic diagram in the A-A direction in FIG. 1;
FIG. 6 is a first cross-sectional structural schematic diagram in a C-C direction in FIG. 1;
FIG. 7 is a second cross-sectional structural schematic diagram in the C-C direction in FIG. 1;
FIG. 8 is an exploded view of a preferred embodiment of the present utility model;
FIG. 9 is an internal structural schematic diagram of a preferred embodiment of the present utility model;
FIG. 10 is a schematic diagram of a gas path main body and a related structure in a preferred embodiment of the present utility model; and
FIG. 11 is a schematic diagram of a gas inflow main body and a related structure in a preferred embodiment of the present utility model.

### Detailed Description of Embodiments

This section will describe the specific embodiments of the present utility model in detail. The preferred embodiments of the present utility model are shown in the accompanying drawings. The function of the accompanying drawings is to supplement the statement of the text part of the description with graphics, so that people can intuitively and vividly understand each technical feature and overall technical solution of the present utility model. However, the accompanying drawings shall not be construed as a limitation to the protection scope of the present utility model.

In the statement of the present utility model, it should be understood that orientation statements, such as orientation or position relationships indicated by up, down, front, back, left, right, etc., are based on the orientation or position relationships shown in the accompanying drawings and are only to facilitate the statement of the present utility model and simplify the statement, rather than indicate or imply that the device or element referred to must have a specific orientation, be constructed and operate in a specific orientation, and therefore should not be understood as a limitation to the present utility model.

In the statement of the present utility model, "several" means one or more, "a plurality of" means two or more, "greater than", "less than", and "more than", etc. are understood to exclude the original number, and above, below, within, etc. are understood to include the original number. If there is a statement of first and second, it is only for the purpose of distinguishing technical features, and cannot be understood as indicating or implying the relative importance or implicitly indicating the number of indicated technical features or implicitly indicating the order of indicated technical features.

In the statement of the present utility model, unless otherwise explicitly specified, words such as setting, mounting and connection should be understood in a broad sense. Those skilled in the art can reasonably determine the specific meanings of the above words in the present utility model in combination with the specific content of the technical solution.

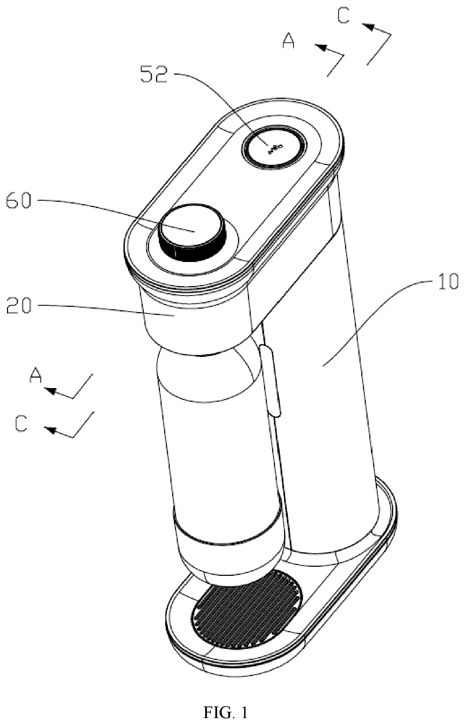

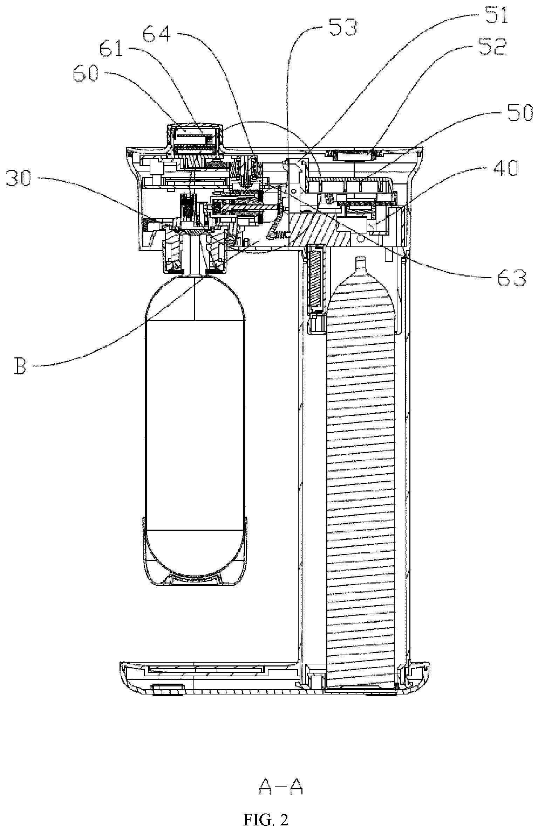

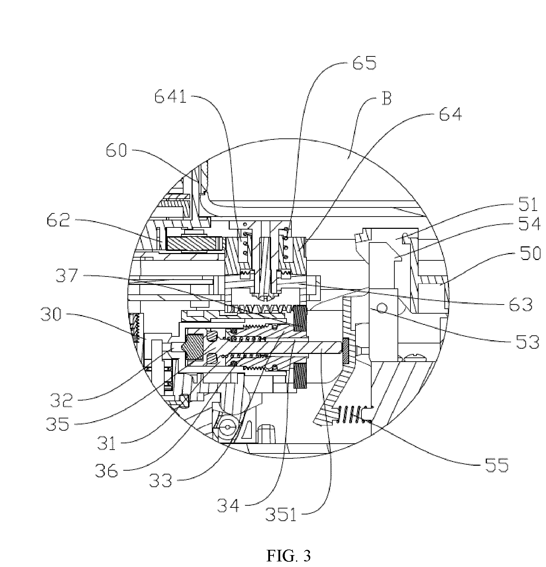

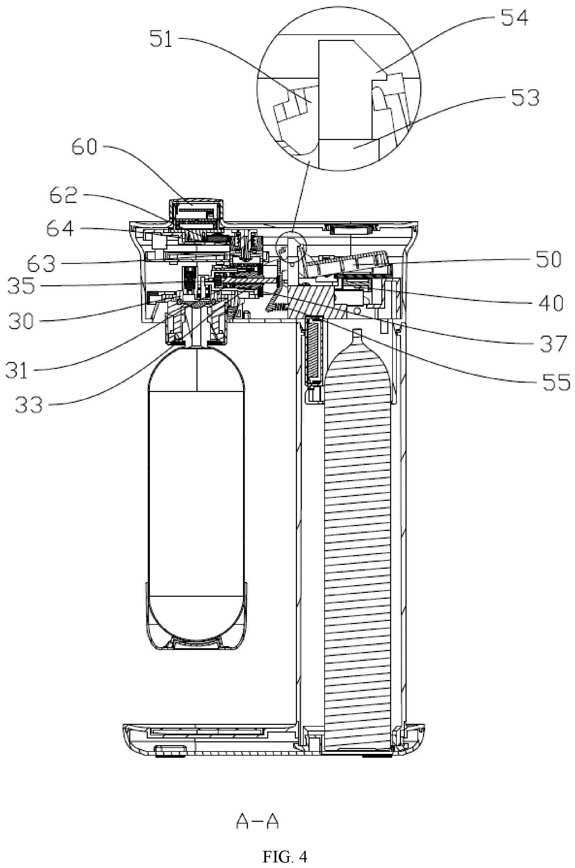

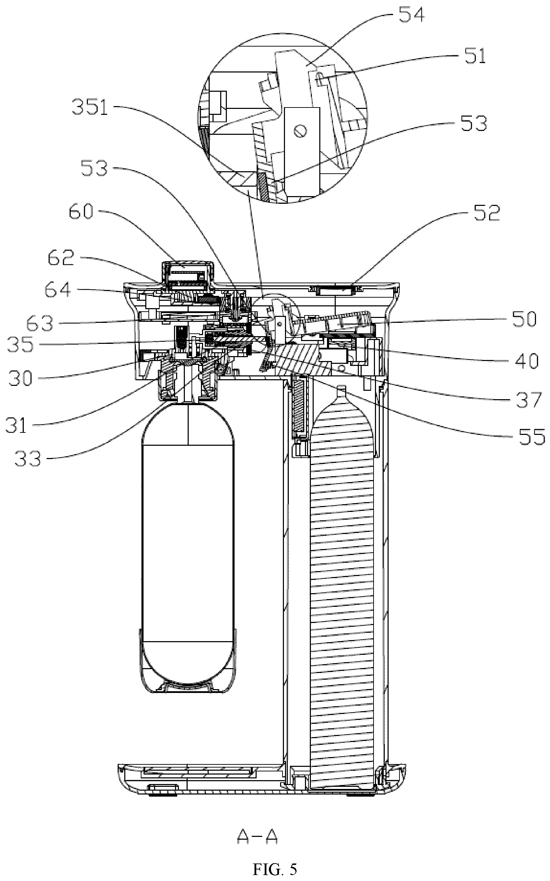

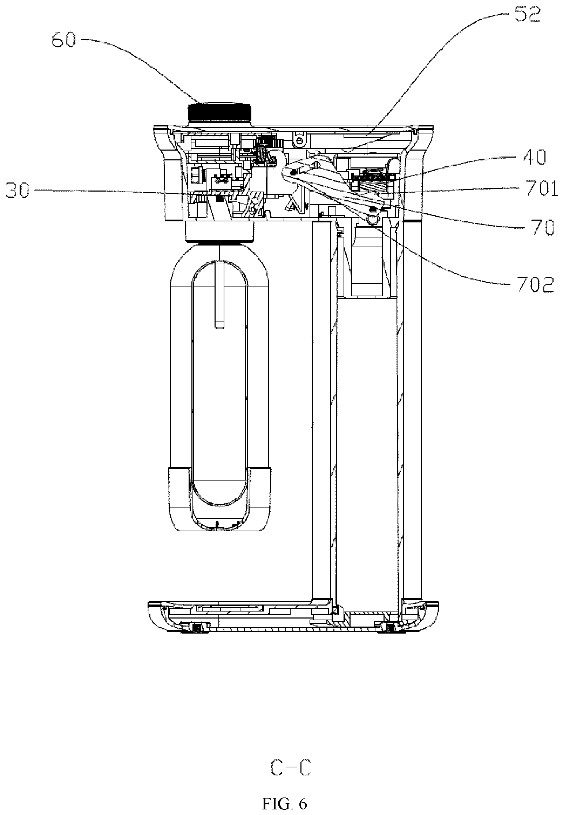

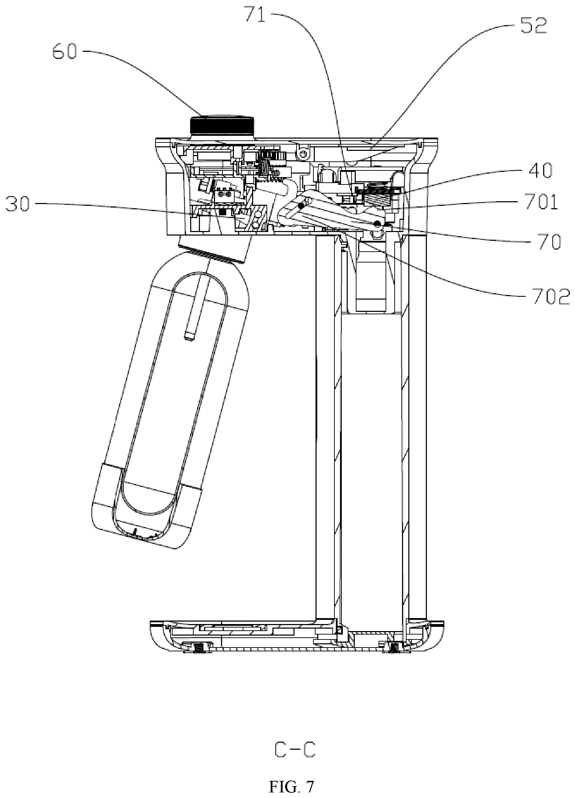

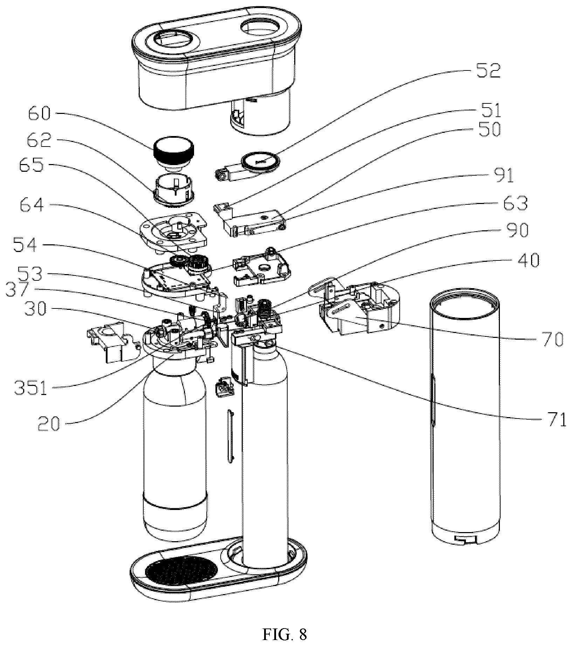

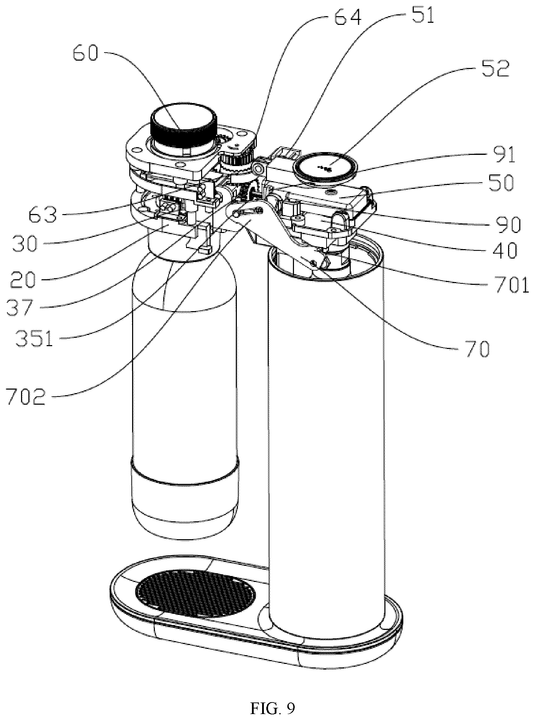

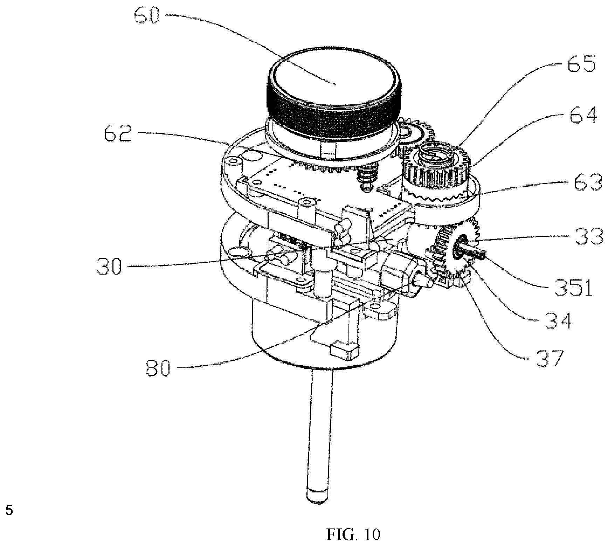

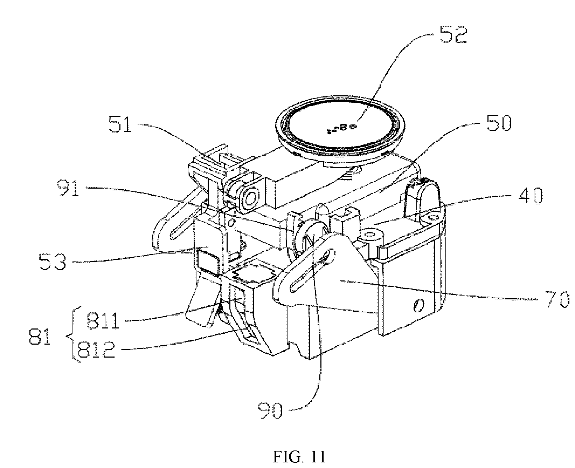

Referring to FIG. 1 to FIG. 11, a sparkling water machine capable of achieving automatic resetting from gas inflow comprises:
a main machine 10, wherein one side of the main machine 10 is provided with a sub-machine 20, the main machine 10 is provided with a gas inflow main body 40, the gas inflow main body 40 is provided with a gas cylinder connecting port, and the gas inflow main body 40 is provided with a gas inflow channel that extends to the gas cylinder connecting port and a gas inflow rod that is used for pressing a carbon dioxide gas cylinder;
a gas inflow pressure rod 50, wherein the gas inflow pressure rod 50 is provided on the main machine 10, the gas inflow pressure rod 50 is located on a surface of the gas inflow rod and used for driving the gas inflow rod to press down, the gas inflow pressure rod 50 is provided with a through hole 51 penetrating up and down, and a surface of the main machine 10 is provided with a button 52 that drives the gas inflow pressure rod 50 to move;
a gas path main body 30, wherein the gas path main body 30 is provided on the sub-machine 20, a bottom of the gas path main body 30 is provided with a water bottle connector, the gas path main body 30 is provided with a main gas path channel that is in communication to the water bottle connector and the gas inflow channel, the gas path main body 30 is provided with a gas pressure chamber 31, a front end of the gas pressure chamber 31 is provided with a gas pressure channel 32 that is in communication to the water bottle connector, and a rear end of the gas pressure chamber 31 is provided with a gas pressure hole 34;
a gas pressure valve body 35, wherein the gas pressure valve body 35 is provided in the gas pressure chamber 31, the gas pressure valve body 35 is provided with a first resetting device 36 that drives the gas pressure valve body 35 to seal the gas pressure channel 32, and a rear end of the gas pressure valve body 35 is provided with a gas pressure valve rod 351 used for extending out along the gas pressure hole 34 to an outer side of the gas path main body 30; and
a gas inflow connecting rod hook 53, wherein the gas inflow connecting rod hook 53 is pivotally connected in the main machine 10, an upper end of the gas inflow connecting rod hook 53 is provided with a hook body 54 towards the through hole 51, a surface of the hook body 54 and/or a lower end of the through hole 51 is provided with a guide slope, a lower end of the gas inflow connecting rod hook 53 is a driving end directly facing the gas pressure valve rod 351, the gas inflow connecting rod hook 53 is provided with a second resetting device 55, and when the gas inflow pressure rod 50 is pressed down, the upper end of the gas inflow connecting rod hook 53 penetrates through the through hole 51 to move to an upper end of the through hole 51 and the hook body 54 hooks an upper edge of the through hole 51.

When in use, the gas inflow pressure rod 50 is pressed through the button 52, such that the carbon dioxide gas cylinder can be pressed by the gas inflow rod to supply a gas, and a carbon dioxide gas enters the sparkling water bottle mounted on the gas cylinder connecting port through the gas inflow channel and the main gas path channel. Meanwhile, because the gas inflow pressure rod 50 is driven, the through hole 51 and the gas inflow connecting rod hook 53 move relative to each other. The upper end of the gas inflow connecting rod hook 53 is inserted into the through hole 51 and located above the through hole 51, and the hook body 54 hooks the upper edge of the through hole 51 under the action of the second resetting device 55, such that the gas inflow pressure rod 50 is fixed and stays in a state of driving the gas inflow rod for a long time. When a gas pressure in the sparkling water bottle reaches a specified value, the gas pressure is fed back to the gas pressure valve body 35 through the gas pressure channel 32, such that the gas pressure valve body 35 is pushed to overcome a force of the first resetting device 36 to move outward and then press the driving end of the gas inflow connecting rod hook 53, and the gas inflow connecting rod hook 53 swings to enable the hook body 54 to swing so as to be detached from the edge of the through hole 51. At this time, the gas inflow pressure rod 50 is not limited so as to be automatically reset and to stop gas inflow. A whole gas inflow and resetting process is controlled by a mechanical structure, and higher stability is achieved.

In the present solution, the gas inflow pressure rod 50 and the button 52 can be provided independently and can also be formed integrally.

In the present solution, preferably, a rear end of the gas inflow pressure rod 50 is pivotally connected in the main machine 10, a middle portion of the gas inflow pressure rod 50 is located above the gas inflow rod, and the through hole 51 is provided at a front end of the gas inflow pressure rod 50.

For further optimization, in order to adjust the concentration of the carbon dioxide gas filled into the sparkling water bottle, preferably, an end cover 33 is in threaded connection to the rear end of the gas pressure chamber 31, the gas pressure hole 34 is provided on the end cover 33, a rear end of the first resetting device 36 abuts against an inner surface of the end cover 33, an outer periphery of the end cover 33 is provided with a first driven gear 37, a surface of the sub-machine 20 or the main machine 10 is provided with a gear knob 60, and the gear knob 60 comprises a first driving gear 62 that is engaged with the first driven gear 37. By rotating the gear knob 60, the first driving gear 62 drives the first driven gear 37 to rotate, thereby driving the end cover 33 to more forward and backward in the gas pressure chamber 31 so as to adjust a force of the first resetting device 36, such that the gas pressure valve body 35 is pushed when the gas pressure in the sparkling water bottle is different.

Considering that the gear and the actual pressure in the sparkling water bottle are mismatched due to misalignment of the first gear and the second gear in some cases, preferably, a clutch gear set is provided between the first driven gear 37 and the first driving gear 62, the clutch gear set comprises a first clutch gear 63 and a second clutch gear 64, the first clutch gear 63 is provided with a second driven gear that is always engaged with the first driven gear 37, the second clutch gear 64 is provided with a third driven gear that is engaged with the first driving gear 62, the first clutch gear 63 is provided with first clutch teeth, the second clutch gear 64 is provided with second clutch teeth that are engaged with the first clutch teeth, the first clutch gear 63 or the second clutch gear 64 is provided with an elastic pressing member 65 such that the first clutch gear 63 and the second clutch gear 64 are engaged with each other, the gear knob 60 is provided with a first limiting end that limits a rotation amplitude of the gear knob, and the first driven gear 37 is provided with a second limiting end that limits a rotation amplitude of the first driven gear 37. The clutch gear set plays the role of gear resetting. In an actual process of adjusting gear resetting, the gear knob 60 is rotated towards two directions to the bottom once. When the gear is mismatched, in a rotation process, the first driven gear 37 is rotated to a predetermined position and then limited to rotate through the second limiting end, and at this time, the gear knob 60 is not rotated to the end of a stroke. Then, the gear knob 60 is continuously rotated to apply a greater force on the second clutch gear 64, such that the second clutch gear 64 and the first clutch gear 63 overcome a force of the elastic pressing member 65 to open each other and cause slipping, and the gear knob 60 can be continuously rotated to the end of the stroke so as to be consistent with a position of the first driven gear 37. Meanwhile, due to a slipping effect of the second clutch gear 64 and the first clutch gear 63, the first driving gear 62, the clutch gear set and the first driven gear 37 will not be damaged.

Preferably, the first clutch teeth are provided on an upper end surface of the first clutch gear 63, the second clutch teeth are provided on a lower end surface of the second clutch gear 64, and the elastic pressing member 65 is provided on an upper end surface of the second clutch gear 64 and presses the second clutch gear 64 downward on the upper end surface of the first clutch gear 63.

Preferably, the upper end surface of the second clutch gear 64 is provided with an annular receiving groove 641, and the elastic pressing member 65 is a spring that is inserted in the annular receiving groove 641.

The first limiting end is preferably a main pin body that is provided on a surface of the first driving gear 62 and an auxiliary pin body that is provided in the sub-machine 20. When the first driving gear 62 is rotated towards two sides to extreme positions, the main pin body abuts against the auxiliary pin body. In another embodiment, the first limiting end comprises a stroke groove that is provided in the sub-machine 20 and a stroke block that is located on the gear knob 60, and the stroke block is located in the stroke groove, such that the rotation amplitude of the gear knob 60 is limited through the stroke groove. Specific embodiments of the second limiting end may be the same as embodiments of the first limiting end, or may also be other unexplained embodiments.

For further optimization, preferably, several Hall sensors are provided on a peripheral side of the gear knob 60, the gear knob 60 is provided with magnets 61 that cooperate with the Hall sensors, and the surface of the sub-machine 20 or the main machine is provided with gear display screens that are electrically connected to the Hall sensors.

For further optimization, preferably, the main machine 10 is internally provided with a damping gear 90, and the gas inflow pressure rod 50 is provided with a damping rack 91 that is engaged with the damping gear 90, such that the gas inflow pressure rod 50 is reset at a relatively slow speed, thereby preventing a crashing sound.

For the gas inflow pressure rod 50, a restoring force of a cylinder needle of the carbon dioxide gas cylinder can be transmitted to the gas inflow rod, and then the force is transmitted to the gas inflow pressure rod 50 through the gas inflow rod, thereby driving the gas inflow pressure rod 50 to reset. In order to accelerate resetting of the gas inflow pressure rod 50 and reduce an action force on the carbon dioxide gas cylinder, preferably, the gas inflow pressure rod 50 is provided with a third resetting device, and the gas inflow rod is provided with a fourth resetting device.

For further optimization, in order to facilitate mounting of the sparkling water bottle, preferably, the gas path main body 30 is pivotally connected to the sub-machine 20 such that the gas path main body 30 can swing outward relative to the sub-machine 20. On this basis, in order to prevent a high pressure in the sparkling water bottle when the sparkling water bottle is in a mounting process and is not completely reset to a working position, preferably, the gas path main body 30 is provided with an exhaust chamber, a front end of the exhaust chamber is provided with an exhaust channel that is in communication to the water bottle connector and an exhaust hole that is provided at a rear end of the exhaust chamber, the exhaust chamber is internally provided with an exhaust valve 80, a rear end of the exhaust valve 80 is provided with an exhaust rod that extends along the exhaust hole to an outer side of the gas path main body 30, the main machine 10 is internally provided with an exhaust push rod support member 81 that is located at a rear end of the exhaust rod, a surface of the exhaust push rod support member 81 is provided with a front pressure surface 811 and an inclined guide surface 812 that is located at a lower end of the front pressure surface 811, and the exhaust rod abuts against the front pressure surface 811 and enables the exhaust valve 80 to seal the exhaust channel in a normal state.

When the gas path main body 30 swings outward relative to the sub-machine 20 to a mounting state, the exhaust rod at this time swings downward along the front pressure surface 811 until it cannot be abutted by the exhaust push rod support member 81, and the exhaust valve 80 at this time can move freely in the exhaust chamber, such that the sparkling water bottle is in communication with the outside, and the sparkling water bottle cannot store gas at this time. When the gas path main body 30 drives the sparkling water bottle to swing and reset, the exhaust rod moves along the inclined guide surface 812 to the front pressure surface 811, such that the exhaust valve 80 seals the exhaust channel, and the sparkling water bottle can be filled with a carbon dioxide gas and enter a high-pressure state. Preferably, the exhaust valve 80 comprises a front end body and a rear end body, the exhaust rod is provided on the rear end body, and a tensioning elastic member is provided between the front end body and the rear end body, such that under normal conditions, the front end body seals the exhaust channel under an action of the tensioning elastic member and the front pressure surface 811. When the gas pressure in the sparkling water bottle is too high, the excessive gas pressure pushes the front end body to move towards the rear end body so to open the exhaust channel, thereby achieving the effect of releasing the pressure.

For further optimization, preferably, a weight sensor 71 is provided below the gas inflow main body 40, a gas inflow main body support member 70 is pivotally connected in the main machine 10, a rear end of the gas inflow main body support member 70 is provided with a support portion 701 that is located below the gas inflow main body 40 and used for supporting the gas inflow main body 40 up and down from the weight sensor 71, a front end of the gas inflow main body support member 70 is a driving handle 702, and the driving handle 702 is movably connected with the gas path main body 30 such that the gas path main body 30 drives the driving handle 702 to swing when swinging. In this state, the gas path main body 30 drives the gas inflow main body support member 70 to swing in a swinging process. When the gas path main body 30 is at a working position, the gas inflow main body support member 70 supports the gas inflow main body 40 from the weight sensor 71 at this time, the gas inflow main body 40 and the weight sensor 71 are not in contact with each other at this time, and a force applied by a user to the gas inflow pressure rod 50 is not transmitted to the weight sensor 71. When the gas path main body 30 swings relative to the sub-machine 20 to a position for assembling and disassembling the sparkling water bottle, the gas path main body 30 drives the gas inflow main body support member 70 to swing so as to enable the support portion 701 to place the gas inflow main body 40 on the weight sensor 71 in a swinging process, such that a real-time weight of the carbon dioxide gas cylinder is measured, correspondingly a residual amount of the gas in the carbon dioxide gas cylinder is known, and convenience is provided for a user to be ready for replacing the cylinder in time. Preferably, the driving handle 702 is provided with a strip-shaped groove, and the gas inflow main body 40 is provided with a linkage pin that is inserted in the strip-shaped groove, such that convenience is provided for the gas inflow main body 40 to drive the driving handle 702 to swing.

In the present solution, preferably, the first resetting device 36, the second resetting device 55, the third resetting device, the fourth resetting device and the tensioning elastic member are all springs, and may also be elastic rubber columns, two sets of mutually exclusive magnets, or other elastic structures.

The above are only preferred embodiments of the present utility model, and are not intended to limit the patent scope of the present utility model. Under the utility model concept of the present utility model, equivalent structural transformations made using the contents of the description and drawings of the present utility model, or directly or indirectly used in other relevant technical fields are all included in the patent protection scope of the present utility model.

## Claims

1. A sparkling water machine capable of achieving automatic resetting from gas inflow, comprising:
a main machine (10), wherein one side of the main machine (10) is provided with a sub-machine (20), the main machine (10) is provided with a gas inflow main body (40), the gas inflow main body (40) is provided with a gas cylinder connecting port, and the gas inflow main body (40) is provided with a gas inflow channel that extends to the gas cylinder connecting port and a gas inflow rod that is used for pressing a carbon dioxide gas cylinder;
a gas inflow pressure rod (50), wherein the gas inflow pressure rod (50) is provided on the main machine (10), the gas inflow pressure rod (50) is located on a surface of the gas inflow rod and used for driving the gas inflow rod to press down, the gas inflow pressure rod (50) is provided with a through hole (51) penetrating up and down, and a surface of the main machine (10) is provided with a button (52) that drives the gas inflow pressure rod (50) to move;
a gas path main body (30), wherein the gas path main body (30) is provided on the sub-machine (20), a bottom of the gas path main body (30) is provided with a water bottle connector, the gas path main body (30) is provided with a main gas path channel that is in communication to the water bottle connector and the gas inflow channel, the gas path main body (30) is provided with a gas pressure chamber (31), a front end of the gas pressure chamber (31) is provided with a gas pressure channel (32) that is in communication to the water bottle connector, and a rear end of the gas pressure chamber (31) is provided with a gas pressure hole (34);
a gas pressure valve body (35), wherein the gas pressure valve body (35) is provided in the gas pressure chamber (31), the gas pressure valve body (35) is provided with a first resetting device (36) that drives the gas pressure valve body (35) to seal the gas pressure channel (32), and a rear end of the gas pressure valve body (35) is provided with a gas pressure valve rod (351) used for extending out along the gas pressure hole (34) to an outer side of the gas path main body (30); and
a gas inflow connecting rod hook (53), wherein the gas inflow connecting rod hook (53) is pivotally connected in the main machine (10), an upper end of the gas inflow connecting rod hook (53) is provided with a hook body (54) towards the through hole (51), a surface of the hook body (54) and/or a lower end of the through hole (51) is provided with a guide slope, a lower end of the gas inflow connecting rod hook (53) is a driving end directly facing the gas pressure valve rod (351), the gas inflow connecting rod hook (53) is provided with a second resetting device (55), and when the gas inflow pressure rod (50) is pressed down, the upper end of the gas inflow connecting rod hook (53) penetrates through the through hole (51) to move to an upper end of the through hole (51) and the hook body (54) hooks an upper edge of the through hole (51).

2. The sparkling water machine capable of achieving automatic resetting from gas inflow according to Claim 1, **characterized in that**:
a rear end of the gas inflow pressure rod (50) is pivotally connected in the main machine (10), a middle portion of the gas inflow pressure rod (50) is located above the gas inflow rod, and the through hole (51) is provided at a front end of the gas inflow pressure rod (50).

3. The sparkling water machine capable of achieving automatic resetting from gas inflow according to Claim 1, **characterized in that**:
an end cover (33) is in threaded connection to the rear end of the gas pressure chamber (31), the gas pressure hole (34) is provided on the end cover (33), a rear end of the first resetting device (36) abuts against an inner surface of the end cover (33), an outer periphery of the end cover (33) is provided with a first driven gear (37), a surface of the sub-machine (20) or the main machine (10) is provided with a gear knob (60), and the gear knob (60) comprises a first driving gear (62) that is engaged with the first driven gear (37).

4. The sparkling water machine capable of achieving automatic resetting from gas inflow according to Claim 3, **characterized in that**:
a clutch gear set is provided between the first driven gear (37) and the first driving gear (62), the clutch gear set comprises a first clutch gear (63) and a second clutch gear (64), the first clutch gear (63) is provided with a second driven gear that is always engaged with the first driven gear (37), the second clutch gear (64) is provided with a third driven gear that is engaged with the first driving gear (62), the first clutch gear (63) is provided with first clutch teeth, the second clutch gear (64) is provided with second clutch teeth that are engaged with the first clutch teeth, the first clutch gear (63) or the second clutch gear (64) is provided with an elastic pressing member (65) such that the first clutch gear (63) and the second clutch gear (64) are engaged with each other, the gear knob (60) is provided with a first limiting end that limits a rotation amplitude of the gear knob (60), and the first driven gear (37) is provided with a second limiting end that limits a rotation amplitude of the first driven gear (37).

5. The sparkling water machine capable of achieving automatic resetting from gas inflow according to Claim 4, **characterized in that**:
the first clutch teeth are provided on an upper end surface of the first clutch gear (63), the second clutch teeth are provided on a lower end surface of the second clutch gear (64), and the elastic pressing member (65) is provided on an upper end surface of the second clutch gear (64) and presses the second clutch gear (64) downward on the upper end surface of the first clutch gear (63).

6. The sparkling water machine capable of achieving automatic resetting from gas inflow according to Claim 3, **characterized in that**:
several Hall sensors are provided on a peripheral side of the gear knob (60), the gear knob (60) is provided with magnets (61) that cooperate with the Hall sensors, and the surface of the sub-machine (20) or the main machine is provided with gear display screens that are electrically connected to the Hall sensors.

7. The sparkling water machine capable of achieving automatic resetting from gas inflow according to Claim 1, **characterized in that**:
the main machine (10) is internally provided with a damping gear (90), and the gas inflow pressure rod (50) is provided with a damping rack (91) that is engaged with the damping gear (90).

8. The sparkling water machine capable of achieving automatic resetting from gas inflow according to Claim 1, **characterized in that**:
the gas path main body (30) is pivotally connected to the sub-machine (20) such that the gas path main body (30) can swing outward relative to the sub-machine (20).

9. The sparkling water machine capable of achieving automatic resetting from gas inflow according to Claim 8, **characterized in that**:
the gas path main body (30) is provided with an exhaust chamber, a front end of the exhaust chamber is provided with an exhaust channel that is in communication to the water bottle connector and an exhaust hole that is provided at a rear end of the exhaust chamber, the exhaust chamber is internally provided with an exhaust valve (80), a rear end of the exhaust valve (80) is provided with an exhaust rod that extends along the exhaust hole to an outer side of the gas path main body (30), the main machine (10) is internally provided with an exhaust push rod support member (81) that is located at a rear end of the exhaust rod, a surface of the exhaust push rod support member (81) is provided with a front pressure surface (811) and an inclined guide surface (812) that is located at a lower end of the front pressure surface (811), and the exhaust rod abuts against the front pressure surface (811) and enables the exhaust valve (80) to seal the exhaust channel in a normal state.

10. The sparkling water machine capable of achieving automatic resetting from gas inflow according to Claim 8, **characterized in that**:
a weight sensor (71) is provided below the gas inflow main body (40), a gas inflow main body support member (70) is pivotally connected in the main machine (10), a rear end of the gas inflow main body support member (70) is provided with a support portion (701) that is located below the gas inflow main body (40) and used for supporting the gas inflow main body (40) up from the weight sensor (71) or putting down the gas inflow main body, a front end of the gas inflow main body support member (70) is a driving handle (702), and the driving handle (702) is movably connected with the gas path main body (30) such that the gas path main body (30) drives the driving handle (702) to swing when swinging.
